# EUROPÄISCHE PATENTSCHRIFT

(11) **EP 2 993 464 B1**
(45) Veröffentlichungstag und Bekanntmachung des Hinweises auf die Patenterteilung: **17.03.2021**
(21) Anmeldenummer: 15183848.9
(22) Anmeldetag: 04.09.2015
(51) Int. Cl.: G01N 21/90, G01N 21/958, G06T 7/00

(54) **VORRICHTUNG UND VERFAHREN ZUR QUALITÄTSKONTROLLE TRANSPARENTER OBJEKTE**
DEVICE AND METHOD FOR CONTROLLING THE QUALITY OF TRANSPARENT OBJECTS
DISPOSITIF ET PROCÉDÉ DESTINÉS AU CONTRÔLE DE LA QUALITÉ D'OBJETS TRANSPARENTS

(30) Priorität: 05.09.2014 DE 102014217771
(43) Veröffentlichungstag der Anmeldung: 09.03.2016
(73) Patentinhaber: Fraunhofer-Gesellschaft zur Förderung der angewandten Forschung e.V., 80686 München (DE); Karlsruher Institut für Technologie (KIT), 76131 Karlsruhe (DE)
(72) Erfinder: Hartrumpf, Matthias, 76187 Karlsruhe (DE); Längle, Thomas, 76344 Eggenstein (DE); Heizmann, Michael, 76344 Eggenstein (DE); Schulte, Henning, 76137 Karlsruhe (DE); Monari, Eduardo, 76137 Karlsruhe (DE); Gruna, Robin, 76530 Baden-Baden (DE); Vogelbacher, Markus, 76534 Baden-Baden (DE)
(74) Vertreter: Friese Goeden Patentanwälte PartGmbB

(56) Entgegenhaltungen:
- EP-A2- 1 185 854
- DE-A1-102010 032 410
- DE-T2- 69 323 242
- JP-A- 2004 279 218
- JP-A- 2008 268 236

## Beschreibung

Die Erfindung betrifft eine Vorrichtung und ein Verfahren zur Qualitätskontrolle transparenter Objekte, mit zumindest einer Lichtquelle, welche dazu eingerichtet ist, das Objekt zu beleuchten und mit zumindest einer Bilderfassungseinrichtung, mit welcher zumindest ein Bild des Objekts erfassbar ist. Vorrichtungen und Verfahren der eingangs genannten Art können beispielsweise zur Prüfung von Behältergläsern in der pharmazeutischen Industrie oder der Lebensmittelindustrie verwendet werden.

Aus der Praxis ist bekannt, zur Qualitätskontrolle von Behältergläsern eine Transmissionsprüfung durchzuführen. Diese erfolgt mit einer Kamera, welche durch die Öffnung des Behälterglases auf eine unterhalb des Bodens angeordnete, diffuse Beleuchtung gerichtet ist. Durch elektronische Bildverarbeitung oder visuelle Inspektion durch Bedienpersonal kann das erhaltene Kamerabild beurteilt werden, um auf diese Weise Verschmutzungen, Risse oder Formabweichungen zu erkennen.

Der Nachteil solcher bekannten Systeme besteht darin, dass die Prüfaufgabe bei komplex geformten Böden nur unzureichend erfüllt werden kann. So sind die Böden von Behältergläsern oftmals mit Strukturelementen versehen, welche bei der Prüfung auf Verunreinigung falsch-positive oder falschnegative Prüfergebnisse hervorrufen können.

Qualitätskontrollsysteme nach dem Stand der Technik sind aus JP2008268236, DE102010032410, JP2004279218, DE69323242T2, und EP1185854 bekannt.

Ausgehend von diesem Stand der Technik liegt der Erfindung somit die Aufgabe zugrunde, eine Vorrichtung und ein Verfahren zur Qualitätskontrolle transparenter Objekte anzugeben, welches eine erhöhte Zuverlässigkeit aufweist.

Die Aufgabe wird erfindungsgemäß durch eine Vorrichtung gemäß Anspruch 1 und ein Verfahren gemäß Anspruch 6 gelöst.

In einigen Ausführungsformen der Erfindung betrifft diese eine Vorrichtung zur Qualitätskontrolle transparenter Objekte, mit zumindest einer Lichtquelle, welche dazu eingerichtet ist, das Objekt zu Beleuchten und mit zumindest einer Bilderfassungseinrichtung, mit welcher zumindest ein Bild des Objekts erfassbar ist, wobei die Vorrichtung weiterhin zumindest einen Reflektor enthält, wobei das Objekt zwischen dem Reflektor einerseits und der Bilderfassungseinrichtung und der Lichtquelle andrerseits plazierbar ist und wobei der Abstand zwischen dem Objekt und dem Reflektor veränderbar ist.

In einigen Ausführungsformen der Erfindung betrifft diese eine Vorrichtung zur Qualitätskontrolle transparenter Objekte, mit zumindest einer Lichtquelle, welche dazu eingerichtet ist, das Objekt zu Beleuchten und mit zumindest einer Bilderfassungseinrichtung, mit welcher zumindest ein Bild des Objekts erfassbar ist, wobei die Vorrichtung weiterhin zumindest einen Reflektor enthält, wobei das Objekt zwischen dem Reflektor einerseits und der Bilderfassungseinrichtung und der Lichtquelle andrerseits plazierbar ist und wobei der Reflektor konusförmig ausgebildet ist und/oder der Reflektor pyramidenförmig ausgebildet ist und/oder der Reflektor auf zumindest einer Zylindermantelfläche angeordnet ist.

In einigen Ausführungsformen der Erfindung betrifft diese eine Vorrichtung zur Qualitätskontrolle transparenter Objekte, mit zumindest einer Lichtquelle, welche dazu eingerichtet ist, das Objekt zu Beleuchten und mit zumindest einer Bilderfassungseinrichtung, mit welcher zumindest ein Bild des Objekts erfassbar ist, wobei die Vorrichtung weiterhin zumindest einen Reflektor enthält, wobei das Objekt zwischen dem Reflektor einerseits und der Bilderfassungseinrichtung und der Lichtquelle andrerseits plazierbar ist und wobei der Strahlengang der Bilderfassungseinrichtung so wählbar ist, dass sich nur eine einzelne Materiallage des Objektes zwischen Reflektor (6) und Bilderfassungseinrichtung (2) befindet.

In einigen Ausführungsformen der Erfindung betrifft diese eine Vorrichtung zur Qualitätskontrolle transparenter Objekte, mit zumindest einer ersten Lichtquelle, welche dazu eingerichtet ist, das Objekt zu Beleuchten und mit zumindest einer Bilderfassungseinrichtung, mit welcher zumindest ein Bild des Objekts erfassbar ist, wobei die Vorrichtung weiterhin zumindest einen Reflektor enthält, wobei das Objekt zwischen dem Reflektor einerseits und der Bilderfassungseinrichtung und der Lichtquelle andrerseits plazierbar ist und wobei eine Dunkelfeldbeleuchtung und/oder eine weitere Lichtquelle vorhanden ist. Die erste Lichtquelle ist dabei dazu eingerichtet, Licht näherungsweise auf der optischen Achse einzustrahlen und die Dunkelfeldbeleuchtung dazu eingerichtet ist, Licht unter einem größeren Winkel zur optischen Achse einzustrahlen als die erste Lichtquelle.

Auch das erfindungsgemäß vorgeschlagene Verfahren arbeitet mit einer Lichtquelle, welche dazu eingerichtet ist, das Objekt zu beleuchten. Die Lichtquelle emittiert zumindest einen Spektralbereich, in welchem das Prüfobjekt transparent ist. Zur Prüfung von Behältern aus transparentem Glas oder Kunststoff kann die Lichtquelle sichtbares Licht emittieren. Zur Qualitätskontrolle eingefärbter Objekte, welche im sichtbaren Spektralbereich nicht oder nicht im gesamten Spektralbereich transparent sind, kann die Lichtquelle auch infrarote oder ultraviolette Strahlung erzeugen, welche das zu prüfende Objekt durchdringen kann. Neben dem zur Qualitätskontrolle verwendeten Spektralbereich kann die Lichtquelle Licht weiterer Spektralbereiche emittieren. In einigen Ausführungsformen der Erfindung kann die Lichtquelle ein schwarzer Strahler sein oder einen solchen enthalten, beispielsweise eine Glühbirne oder eine Halogenlampe. In anderen Ausführungsformen der Erfindung kann die Lichtquelle eine Bogenlampe sein oder eine solche enthalten. In wiederum einer anderen Ausführungsform der Erfindung kann die Lichtquelle eine Gasentladungslampe oder eine Halbleiterstrahlungsquelle sein. Eine Halbleiterstrahlungsquelle kann ausgewählt sein aus einer Leuchtdiode, einer Superlumineszenzdiode und/oder einem Halbleiterlaser.

Das transparente Objekt, welches einer Qualitätskontrolle unterzogen werden soll, kann beispielsweise ein Behälterglas sein. Für die Zwecke der vorliegenden Erfindung kann ein Behälterglas auch aus einem Kunststoff bestehen, beispielsweise Polyethylen. Das Behälterglas kann in der Lebensmittel- oder pharmazeutischen Industrie Verwendung finden und beispielsweise eine Getränkeflasche, ein Konservenglas, eine Spritze oder eine Ampulle sein. In anderen Ausführungsformen der Erfindung kann das transparente Objekt Architekturglas sein, eine Fahrzeugverglasung oder ein anderes, an sich bekanntes Objekt, welches von elektromagnetischer Strahlung im gewählten Spektralbereich durchdringbar ist.

Weiterhin weist die erfindungsgemäße Vorrichtung zumindest eine Bilderfassungseinrichtung auf, mit welcher zumindest ein Bild des Objekts erfassbar ist. Die Bilderfassungseinrichtung kann beispielsweise eine Photodiode oder ein Photodiodenarray enthalten. In anderen Ausführungsformen der Erfindung kann die Bilderfassungseinrichtung eine Zeilenkamera oder ein Matrix-CCD-Sensor sein oder einen solchen enthalten. Daneben kann die Bilderfassungseinrichtung ein Verschlusselement, ein Objektiv, eine elektronische Steuerung oder weitere, an sich bekannte Elemente elektronischer Bilderfassungseinrichtungen enthalten. Die erfindungsgemäß verwendete Bilderfassungseinrichtung ist dazu eingerichtet, einen analogen oder digitalen Datenstrom bereitzustellen, welcher ein Bild des zu prüfenden transparenten Objektes repräsentiert.

In einigen Ausführungsformen der Erfindung können mehrere Lichtquellen vorhanden sein, welche das Objekt aus unterschiedlichen Winkeln, aus unterschiedlichen Richtungen, mit unterschiedlicher Polarisation und/oder mit unterschiedlichen Spektralbereichen beleuchten. Entsprechend kann in einigen Ausführungsformen der Erfindung eine Mehrzahl von Bilderfassungseinrichtungen vorhanden sein, welche das Objekt mit unterschiedlicher Vergrößerung, aus unterschiedlichen Richtungen oder aus unterschiedlichem Abstand erfassen. Unterschiedliche Bilderfassungseinrichtungen können auch eine erhöhte Empfindlichkeit für unterschiedliche Polarisationsrichtungen und/oder unterschiedliche Spektralbereiche aufweisen.

Erfindungsgemäß wird nun vorgeschlagen, dass die Vorrichtung weiterhin zumindest einen Reflektor enthält, wobei das Objekt zwischen dem Reflektor einerseits und der Bilderfassungseinrichtung und der Lichtquelle andererseits platzierbar ist. Dies bedeutet, dass bei Betrieb der Vorrichtung das Licht der Lichtquelle das Objekt durchdringt, am Reflektor reflektiert wird, das Objekt erneut durchdringt und schließlich in der Bilderfassungseinrichtung nachgewiesen wird.

Der Weg des reflektierten Lichtes hängt von der Art des verwendeten Reflektors ab. In einigen Ausführungsformen der Erfindung kann ein idealer Reflektor ohne Strahlversatz verwendet werden, d.h. jeder einfallende Lichtstrahl wird auf genau demselben Weg zurückreflektiert. In einigen Ausführungsformen der Erfindung kann ein realer Reflektor verwendet werden, welcher in einigen Ausführungsformen der Erfindung einen fertigungsbedingten minimalen Strahlversatz aufweist. Beispielsweise können Folienreflektoren verwendet werden, welche Glaskugeln und/oder Mikroprismen enthalten. Bei diesen Reflektoren kommt es einerseits zu einer Schwächung des detektierbaren, reflektierten Strahls durch Absorption und zu einer Aufweitung des reflektierten Strahles, da ein einfallender idealer Lichtstrahl zu einem divergenten Strahlenbündel führt.

In einigen Ausführungsformen der Erfindung kann der Reflektor strukturiert sein, d.h. der Reflektor besteht aus unterschiedlichen Bereichen, welche sich in den Reflexionseigenschaften unterscheiden. Beispielsweise kann der Reflektor erste Teilflächen aufweisen, welche mit Mikroprismen bedeckt sind und zweite Teilflächen, welche keine Mikroprismen aufweisen. In anderen Ausführungsformen der Erfindung können erste Teilflächen eine erste Dichte und/oder eine erste Größe von Mikroprismen oder Glaskugeln aufweisen und andere Bereiche eine zweite Dichte und/oder eine zweite Größe von Mikroprismen oder Mikroglaskugeln.

In einigen Ausführungsformen der Erfindung kann ein Reflektor verwendet werden, welcher einfallendes Licht mit einem Strahlversatz reflektiert, welcher vom Abstand des einfallenden Strahls zum Symmetriezentrum des Reflektors abhängt. Beispielsweise können Prismenreflektoren oder Kugelreflektoren für die Durchführung des erfindungsgemäßen Verfahrens verwendet werden.

In einigen Ausführungsformen der Erfindung können verschiedene Reflektoren mit unterschiedlichen Eigenschaften eingesetzt werden, wobei eine Mehrzahl von Messungen bzw. Bildern des Objekts mit unterschiedlichen Reflektoren aufgenommen wird.

Die erfindungsgemäße Vorrichtung bzw. das erfindungsgemäße Verfahren unter Verwendung eines Reflektors weist gegenüber bekannten Abbildungen der zu prüfenden Objekte im Hellfeld den Vorteil auf, dass die Brechung an Strukturelementen des Objektes durch den Reflektor teilweise ausgeglichen wird. Der Ausgleich ist umso besser, je kleiner der Rückstrahlwinkelbereich des Reflektors ist und je geringer der Abstand des Reflektors zu den Strukturelementen ist. Darüber hinaus werden Defekte und Grenzflächen kontrastreicher abgebildet, da Transmissionsänderungen quadratischen Einfluss auf das aufgenommene Bild des Objektes haben. Auf diese Weise ist die Unterscheidung von Strukturelementen und Verschmutzungen in einfacher Weise möglich.

In einigen Ausführungsformen der Erfindung kann die Prüfung eines Bodenbereiches eines Behälterglases dadurch erfolgen, das der Reflektor im Außenbereich unterhalb des Bodens des Behälterglases angeordnet ist und die Bilderfassungseinrichtung und die Lichtquelle sich im Behälter oder über der Mündung des Behälters befinden, da auf diese Weise jeder Punkt der inneren Wandung beleuchtet werden kann. Die Brechkräfte im inneren Bodenbereich sind in der Regel erheblich geringer als die Brechkräfte an Strukturelementen des Bodens, sodass jedes Volumenelement des Bodens durchleuchtet wird. Da Brechungen an den Strukturelementen durch den Reflektor weitgehend ausgeglichen werden, können Defekte oder Verschmutzungen kontrastreicher abgebildet werden. Der durch die Öffnung eintretende Strahlengang durchdringt somit außer dem Behälterboden keine weiteren Materialschichten, welche die Auswertung erschweren könnten.

In einigen Ausführungsformen der Erfindung kann zur Untersuchung der Behälterwandung ein Reflektor in einen Behälter eingebracht werden. Dadurch kann vermieden werden, dass der Strahlengang zwei Wandungen durchdringt und dadurch die Auswertung der Aufnahmen zur Qualitätskontrolle oder Qualitätssicherung erschwert wird.

In einigen Ausführungsformen des vorgeschlagenen Verfahrens werden zumindest zwei Bilder des transparenten Objektes aufgenommen, wobei die relative Lage und Orientierung des Objektes zur Bilderfassungseinrichtung erhalten bleibt und ein erstes Bild, welches unter Verwendung des Reflektors aufgenommen wurde, mit zumindest einem zweiten Bild verglichen wird, dessen Aufnahmebedingungen sich vom ersten Bild unterscheiden. Die Unterschiede zwischen den Bildern können in der Art oder dem Abstand des Reflektors, in der Lichtquelle, in der Polarisation oder in weiteren, hier nicht genannten Parametern begründet sein. Da eine Veränderung der Lagebeziehung zwischen Kamera und Objekt vermieden wird, können korrespondierende Strukturen leicht identifiziert werden und die Auswertung der Messung kann erleichtert sein.

In einigen Ausführungsformen der Erfindung kann der Abstand zwischen dem Objekt und dem Reflektor veränderbar sein. Dies erlaubt, zumindest zwei Bilder des Objekts zu erfassen, welche sich zumindest durch den Abstand des Reflektors während der Aufnahme unterscheiden. Erfindungsgemäß wurde erkannt, dass bei einer Vergrößerung des Abstands zwischen dem Objekt und dem Reflektor die Sichtbarkeit brechender Strukturen zunimmt. Somit werden Strukturelemente und Formmerkmale kontrastreicher dargestellt. Der Einfluss absorbierender Strukturen, beispielsweise anhaftender Verschmutzungen, bleibt jedoch annähernd gleich. Somit kann durch einen Vergleich von zwei Bildern des Objektes, welche bei unterschiedlichem Abstand zum Reflektor erfasst wurden, eine Unterscheidung zwischen brechenden Strukturen und Einschlüssen bzw. anhaftenden Verschmutzungen erfolgen.

In einigen Ausführungsformen der Erfindung enthält die Vorrichtung weiterhin zumindest eine Dunkelfeldbeleuchtung. Unter einer Dunkelfeldbeleuchtung wird für die Zwecke der vorliegenden Beschreibung eine Beleuchtung verstanden, bei welcher direkte Strahlung der Lichtquelle nicht in die Bilderfassungseinrichtung gelangt. Jedoch kann das Licht vom Objekt zur Bilderfassungseinrichtung hin reflektiert oder gestreut werden. Somit erscheint das Objekt hell vor einem dunklen Hintergrund. In anderen Ausführungsformen der Erfindung kann das Material des Objektes durch Anregung der Dunkelfeldbeleuchtung zum Leuchten gebracht werden. Bei einer solchen Fluoreszenzaufnahme sind Bereiche mit abweichendem Material, beispielsweise Einschlüsse und Fehler, anhand ihres Helligkeitsunterschiedes erkennbar. Ebenso kann die Lichtstreuung an Einschlüssen, beispielsweise Partikeln oder Blasen, zum Nachweis von Materialfehlern verwendet werden. Durch die Lichtstreuung an Strukturelementen oder Verunreinigungen können diese Elemente mit großer Genauigkeit nachgewiesen werden.

In einigen Ausführungsformen der Erfindung kann der Reflektor konusförmig ausgebildet sein. In anderen Ausführungsformen der Erfindung kann der Reflektor pyramidenförmig ausgebildet sein. Ein solcher Reflektor kann konzentrisch bzw. koaxial in einem rotationssymmetrischen Objekt angeordnet werden, um auf diese Weise die umgebende Wandung mit der Bilderfassungseinrichtung abzubilden. Beispielsweise lässt sich so der Mündungsbereich einer Getränkeflasche prüfen, wobei auch Fehler eines Gewindes an der Mündung nachgewiesen werden können.

In einigen Ausführungsformen der Erfindung kann der Reflektor auf zumindest einer Zylindermantelfläche angeordnet sein. Der Reflektor kann dabei auf der Innenseite eines Hohlzylinders angeordnet sein, welcher das zu prüfende Objekt umgibt. In anderen Ausführungsformen der Erfindung kann der Reflektor auf der Außenseite eines Zylinders angeordnet sein, welcher in einen Hohlkörper einführbar ist. Dadurch können die Lichtquelle und/oder die Bilderfassungseinrichtung außerhalb des Hohlkörpers angeordnet sein, sodass nur geringe Beschränkungen des Bauraumes für diese Komponenten zu beachten sind.

In einigen Ausführungsformen der Erfindung kann der Reflektor auf der Zylindermantelfläche nur eine Teilfläche bedecken. Beispielsweise kann der Reflektor einen Winkelbereich von etwa 180° auf der Zylindermantelfläche bedecken. Somit kann die verbleibende Teilfläche der Zylindermantelfläche entweder mit einem Reflektor mit anderen Eigenschaften bedeckt sein oder aber mit einem neutralen Hintergrund, welcher beispielsweise in Zusammenhang mit einer Dunkelfeldbeleuchtung verwendbar ist. Somit können unterschiedliche Bilder des Objektes erfasst werden, indem der den Reflektor tragende Zylinder lediglich um 180° gedreht wird.

In einigen Ausführungsformen der Erfindung kann die Lichtquelle konzentrisch um das Objektiv der Bilderfassungseinrichtung angeordnet sein. Dieses Merkmal hat die Wirkung, dass der Emittanzbereich der Lichtquelle sich in etwa mit dem Akzeptanzbereich der Bilderfassungseinrichtung deckt. Somit ist der Lichtkegel der Lichtquelle in etwa koaxial zum Erfassungsbereich der Bilderfassungseinrichtung angeordnet. Dies erlaubt eine gleichmäßige Ausleuchtung des Objektes und eine hohe Qualität der mit der Bilderfassungseinrichtung erfassten Bilder des Objektes, welche sich mit geringen Fehlern auslesen lassen.

In einigen Ausführungsformen der Erfindung enthält die Vorrichtung einen Strahlteiler, über welchen der Erfassungsbereich der Bilderfassungseinrichtung und der Lichtkegel der Lichtquelle zusammenführbar sind. Auch dieses Merkmal hat die Wirkung, dass der Lichtkegel der Lichtquelle in etwa koaxial zum Erfassungsbereich der Bilderfassungseinrichtung verläuft.

In einigen Ausführungsformen der Erfindung kann die Vorrichtung weiterhin eine Einrichtung zur Erzeugung einer mechanischen Spannung in dem Objekt enthalten. Diese Einrichtung kann beispielsweise eine Spannzange oder ein Stift sein, welcher mit vorgebbarer Kraft auf das Objekt einwirkt, um auf diese Weise eine mechanische Spannung zu erzeugen. In anderen Ausführungsformen der Erfindung kann die Einrichtung zur Erzeugung einer mechanischen Spannung einen Überdruck oder einen Unterdruck in einem Objekt erzeugen, sodass dieses verformt wird. Das Erfassen zumindest eines Bildes mit der Bilderfassungseinrichtung bei Anwesenheit einer mechanischen Spannung kann dazu genutzt werden, um Fehler im Objekt zu erkennen, beispielsweise durch Spannungsdoppelbrechung oder durch Auswertung der Verformung und Vergleich mit gewünschten Sollwerten.

In einigen Ausführungsformen der Erfindung enthält die Vorrichtung weiter zumindest eine Auswerteeinrichtung, mit welcher die Daten der Bilderfassungseinrichtung auswertbar sind. Die Auswerteeinrichtung ist dazu vorgesehen, zumindest zwei Bilder des zu prüfenden Objektes zu vergleichen und/oder zumindest ein Bild mit einer Referenzaufnahme bzw. Referenzdaten zu vergleichen, um Abweichungen der Beschaffenheit des Objektes von einer gewünschten Sollbeschaffenheit zu erkennen. Hierzu kann die Auswerteeinrichtung elektronische Bauelemente enthalten, beispielsweise einen Mikroprozessor oder einen Microcontroller. Weiterhin kann die Auswerteeinrichtung eine Software enthalten, welche die gewünschte Auswertung der Daten der Bilderfassungseinrichtung vornimmt, wenn diese auf einem Mikroprozessor läuft. Die Auswerteeinrichtung kann in einigen Ausführungsformen der Erfindung Bestandteil einer Steuer- und/oder Regeleinrichtung sein, welche den Ablauf des erfindungsgemäßen Prüfungsverfahrens vollständig automatisiert. Insbesondere kann über zugeordnete Aktoren eine Aufnahmeeinrichtung für das zu prüfende Objekt gesteuert werden, der Abstand und/oder die Art eines Reflektors kontrolliert werden, die Bilderfassungseinrichtung gesteuert werden und/oder zumindest eine Lichtquelle ein- oder ausgeschaltet werden.

In einigen Ausführungsformen der Erfindung können der Auswerteeinrichtung zumindest zwei Bilder des transparenten Objektes zugeführt werden, wobei die Auswerteeinrichtung dazu eingerichtet ist, zumindest ein erstes Bild, welches unter Verwendung des Reflektors aufgenommen wurde, mit einem zweiten Bild zu vergleichen, dessen Aufnahmebedingungen sich vom ersten Bild unterscheiden. In einigen Ausführungsformen der Erfindung kann das zweite Bild unter Verwendung einer anderen Lichtquelle erzeugt werden, welche das Objekt aus unterschiedlichen Winkeln und/oder aus unterschiedlichen Richtungen und/oder mit unterschiedlicher Polarisation und/oder mit unterschiedlichen Spektralbereichen beleuchtet. Alternativ oder zusätzlich kann für das zweite Bild eine Bilderfassungseinrichtungen verwendet werden, welche das Objekt mit unterschiedlicher Vergrößerung und/oder aus unterschiedlichen Richtungen und/oder aus unterschiedlichem Abstand und/oder mit einer erhöhte Empfindlichkeit für unterschiedliche Polarisationsrichtungen und/oder unterschiedliche Spektralbereiche erfasst. Alternativ oder zusätzlich kann für das zweite Bild der Abstand des Reflektors vergrößert werden und/oder ein Reflektor mit anderen Eigenschaften verwendet werden.

In einigen Ausführungsformen der Erfindung kann das transparente Objekt zwischen dem ersten Bild und dem zweiten Bild von einer ersten Bildaufnahmestation zu einer zweiten Bildaufnahmestation transportiert werden. Dies erlaubt einen rationellen Einsatz der Erfindung in Produktionsanlagen, in welchen Behälter ohnehin zwischen verschiedenen Stationen transportiert werden müssen, beispielsweise einer Waschmaschine, einer Füllmaschine und einer Etikettiermaschine. Die Bildaufnahmestationen können auf einem Förderband von den zu prüfenden transparenten Objekten sequentiell durchlaufen werden, so dass unterschiedliche Aufnahmebedingungen für das erste Bild und das zumindest eine zweite Bild rasch und einfach erzeugt werden können.

Nachfolgend soll die Erfindung anhand von Figuren ohne Beschränkung des allgemeinen Erfindungsgedankens näher erläutert werden. Dabei zeigt:
- Figur 1: eine erste Messung an einem zu prüfenden Objekt 5 gemäß der vorliegenden Erfindung mit einer ersten Ausführungsform der erfindungsgemäßen Vorrichtung.
- Figur 2: zeigt eine zweite Messung an dem zu prüfenden Objekt 5 mit einer ersten Ausführungsform der erfindungsgemäßen Vorrichtung.
- Figur 3: zeigt eine dritte Messung an dem zu prüfenden Objekt mit einer ersten Ausführungsform der erfindungsgemäßen Vorrichtung.
- Figur 4: zeigt eine zweite Ausführungsform der Vorrichtung im Grundriss.
- Figur 5: zeigt die zweite Ausführungsform der Vorrichtung im Aufriss.
- Figur 6: zeigt eine dritte Ausführungsform der Vorrichtung im Aufriss.
- Figur 7: zeigt ein Blockschaltbild der erfindungsgemäßen Vorrichtung.

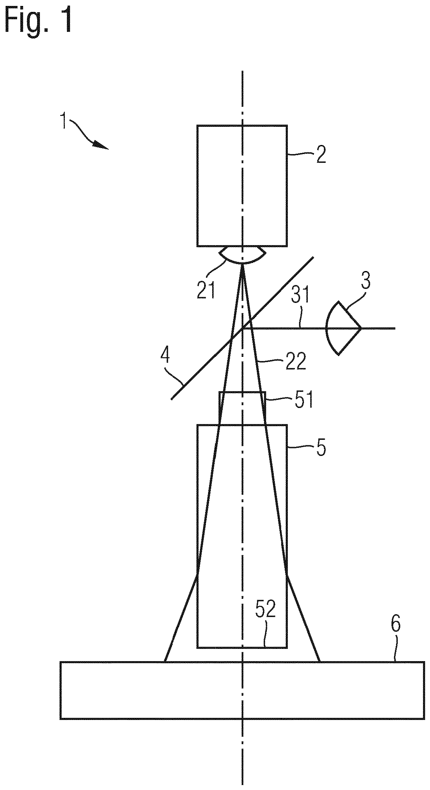

Figur 1 zeigt eine erste Ausführungsform der erfindungsgemäßen Vorrichtung 1 bei der Durchführung eines ersten Verfahrensschrittes. Die Vorrichtung 1 enthält zumindest eine Bilderfassungseinrichtung 2, eine Lichtquelle 3 sowie einen Reflektor 6.

Die Bilderfassungseinrichtung 2 kann in einigen Ausführungsformen der Erfindung eine an sich bekannte elektronische Kamera sein, welche beispielsweise mittels eines CCD-Matrix-Detektors einen Datenstrom erzeugt, welche ein Bild des Objektes 5 repräsentiert. Die Bilderfassungseinrichtung 2 kann weiterhin ein Objektiv 21 aufweisen, welches das Objekt 5 auf die Sensorebene abbildet.

Der Reflektor 6 kann beispielsweise ein an sich bekannter Folienreflektor sein oder einen solchen enthalten. Der Folienreflektor kann Glaskugeln und/oder Mikroprismen enthalten, um einfallendes Licht ohne oder mit minimalem Strahlversatz in die Einfallsrichtung zurückzuwerfen. In der dargestellten Ausführungsform ist der Reflektor 6 plan und eben ausgeführt.

Weiterhin enthält die Vorrichtung eine Lichtquelle 3, welche beispielsweise sichtbares Licht und/oder Infrarotstrahlung emittiert. Die Lichtquelle 3 erzeugt einen Lichtkegel 31, welche über einen Strahlteiler 4 in den Erfassungsbereich 22 der Bilderfassungseinrichtung 2 reflektiert wird, sodass der Lichtkegel 31 und der Bilderfassungsbereich 22 in etwa konzentrisch auf das Objekt 5 fallen.

Das Objekt 5 befindet sich zwischen dem Reflektor 6 einerseits und der Lichtquelle 3 und der Bilderfassungseinrichtung 2 andererseits. Das Objekt 5 kann in einer nicht dargestellten Halterung aufgenommen sein, sodass eine Mehrzahl von Objekten 5 sequenziell automatisiert der Prüfung unterzogen werden kann und/oder dass das Objekt 5 relativ zur Vorrichtung 1 verschiebbar und/oder drehbar ist. Hierdurch können unterschiedliche Aufnahmen des Objektes 5 und/oder unterschiedliche Bereiche des Objektes 5 der Prüfung unterzogen werden.

Im dargestellten Ausführungsbeispiel handelt es sich beim Objekt 5 um ein Behälterglas, beispielsweise eine Getränkeflasche oder ein Glas für eine Konserve. Das Objekt 5 weist demgemäß einen Boden 52 und eine Mündung 51 auf. Der Boden 51 kann mit Strukturelementen versehen sein, beispielsweise einer Herstellerbezeichnung oder einer Bodenprägung, welche eine rutschhemmende Oberfläche des Behälterglases bereitstellt.

Figur 1 zeigt die Vorrichtung 1 während der Durchführung eines ersten Verfahrensschrittes zur Kontrolle des Behälterbodens 52. Während des ersten Verfahrensschrittes befindet sich der Reflektor 6 in einer ersten relativen Lage zum Behälterboden 52. Der Abstand des Reflektors 2 zum Behälterboden 52 kann beispielsweise zwischen etwa 0,5 mm und etwa 5 mm betragen oder zwischen etwa 1 mm und etwa 3 mm.

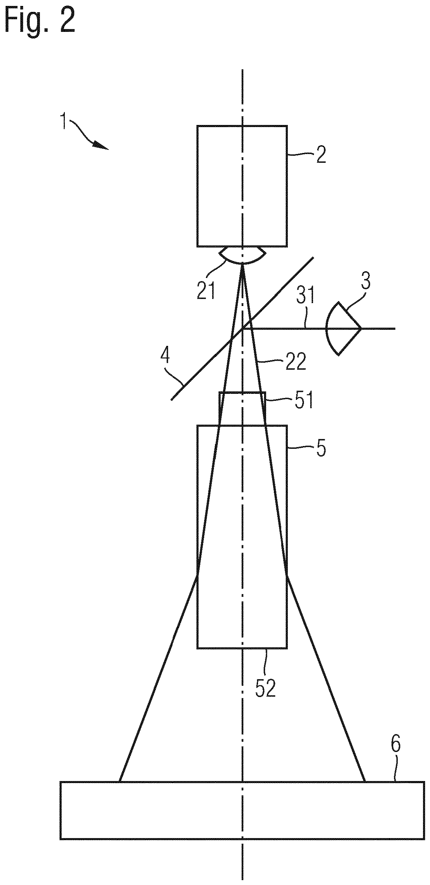

Figur 2 zeigt die Vorrichtung 1 während der Durchführung des zweiten Verfahrensschrittes des vorgeschlagenen Prüfungsverfahrens. Gleiche Bezugszeichen bezeichnen gleiche Elemente der Erfindung, sodass sich die nachfolgende Beschreibung auf die wesentlichen Unterschiede beschränkt.

Wie in Figur 2 ersichtlich ist, weist der Reflektor 6 bei der Durchführung des zweiten Verfahrensschrittes einen größeren Abstand zum Behälterboden 52 auf. Der Abstand kann beispielsweise einen Faktor 3 bis einen Faktor 20 oder einen Faktor 5 bis einen Faktor 15 größer sein als bei Durchführung des ersten Verfahrensschrittes. Die Vergrößerung des Abstandes zwischen Behälterboden 52 und Reflektor 6 hat die Wirkung, dass die Sichtbarkeit brechender Strukturen zunimmt. Solche brechenden Strukturen können beispielsweise Strukturelemente und Formmerkmale des Behälterbodens 52 sein. Der Einfluss absorbierender Strukturen, beispielsweise anhaftender Schmutzpartikel, bleibt jedoch näherungsweise gleich. Somit kann durch Vergleich der Bilder der Bilderfassungseinrichtung aus dem ersten Verfahrensschritt und der Bilder der Bilderfassungseinrichtung aus dem zweiten Verfahrensschritt eine Unterscheidung zwischen Strukturmerkmalen und Verschmutzungen getroffen werden. Bei Vergleich der Messergebnisse mit vorgebbaren Sollwerten, welche entweder an einem idealen Prüfobjekt erhalten oder theoretisch bestimmt wurden, kann somit die Qualität der Strukturelemente bestimmt und/oder die Anwesenheit von Verschmutzungen ausgeschlossen werden.

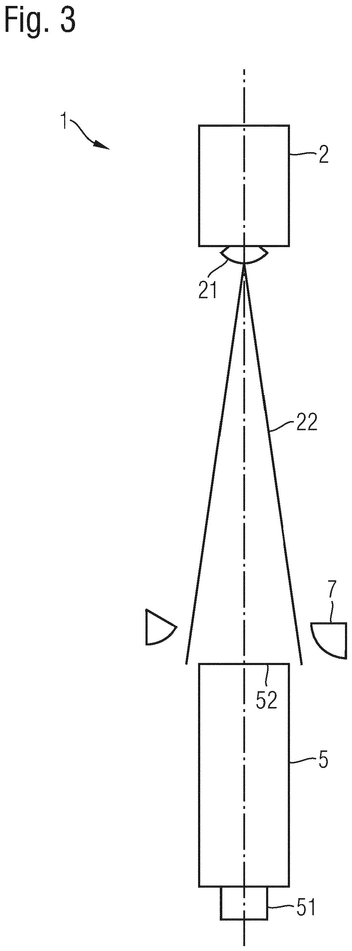

Figur 3 zeigt die Vorrichtung gemäß Figur 1 in einem optionalen dritten Verfahrensschritt. Im dritten Verfahrensschritt wird der Behälterboden 52 des Objektes 5 durch eine Dunkelfeldbeleuchtung 7 bestrahlt. Die Dunkelfeldbeleuchtung 7 stellt einen streifend einfallenden Lichtstrahl zur Verfügung, sodass kein Licht auf direktem Wege von der Dunkelfeldbeleuchtung 7 in das Objektiv 21 der Bilderfassungseinrichtung 2 fallen kann. Jedoch kann das Licht an Strukturelementen und/oder Verschmutzungen reflektiert oder gestreut werden, sodass dieses gestreute Licht mit der Bilderfassungseinrichtung 2 nachweisbar ist.

Wie in Figur 3 ersichtlich ist, wirkt die Dunkelfeldbeleuchtung 7 im dargestellten Ausführungsbeispiel auf die Außenseite des Bodens 52 des Objektes 5 ein. Dies bedeutet, dass das Objekt 5 entweder mit einer zugeordneten, nicht dargestellten Halterung um 180° gedreht wird, oder die Bilderfassungseinrichtung 2 um das Objekt 5 herumgefahren wird oder eine zweite Bilderfassungseinrichtung vorhanden ist, welche das von der Dunkelfeldbeleuchtung 7 ausgesandte und am Objekt 5 reflektierte Licht erfasst.

Die Dunkelfeldbeleuchtung 7 bewirkt eine gerichtete Anregung der Streuung von Partikeln oder Strukturelementen auf einer Seite des Objektes. Somit kann aus dem Vergleich der Daten der Bilderfassungseinrichtung aus dem dritten Verfahrensschritt mit den Daten der Bilderfassungseinrichtung aus dem ersten und zweiten Verfahrensschritt beispielsweise festgestellt werden, ob eine Verschmutzung der Innen- oder Außenseite des Objektes 5 anhaftet und/oder ob Strukturelemente die gewünschte Sollform aufweisen.

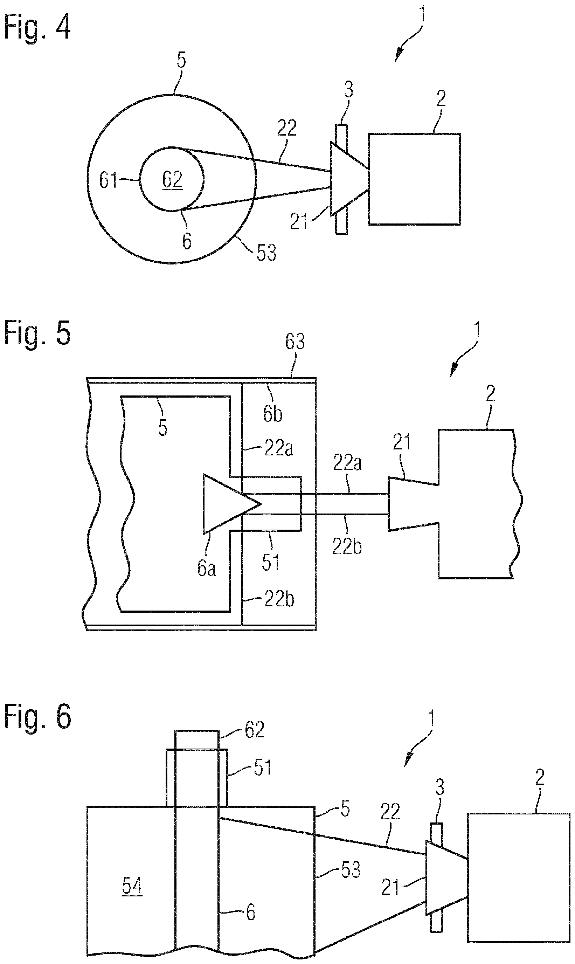

Anhand der Figuren 4 und 5 wird eine weitere Ausführungsform der erfindungsgemäßen Vorrichtung 1 erläutert. Dabei zeigt Figur 4 einen Schnitt bzw. den Grundriss und Figur 5 den Aufriss der Vorrichtung 1. Gleiche Bestandteile sind mit gleichen Bezugszeichen versehen, sodass sich die nachfolgende Beschreibung auf die Unterschiede beschränkt.

Auch die Vorrichtung 1 gemäß der zweiten Ausführungsform verwendet eine Bilderfassungseinrichtung 2 mit einem Objektiv 21. Abweichend von der ersten Ausführungsform ist die Lichtquelle 3 in etwa ringförmig um das Objektiv 21 angeordnet. Auch in diesem Fall ist somit der Lichtkegel der Lichtquelle 3 in etwa konzentrisch zum Erfassungsbereich 22 der Bilderfassungseinrichtung 2.

Das Objekt 5 ist ebenfalls ein Behälter aus einem transparenten Glas oder Kunststoff, beispielsweise eine Getränkeflasche mit einer Mündung 51 und einem nicht dargestellten Boden 52.

Die Vorrichtung 1 ist dazu vorgesehen, die Seitenwand 53 zu prüfen. Hierzu ist der Reflektor 6 zumindest auf einer Teilfläche der Mantelfläche eines Zylinders 62 angeordnet. Der Zylinder 62 kann durch die Mündung 51 in den Innenraum 54 des Objektes 5 eingeführt werden, sodass von der Außenseite über die Seitenwand 53 einfallendes Licht am Reflektor 6 reflektiert und in die Bilderfassungseinrichtung 2 zurückgeworfen wird.

Der Zylinder 62 kann drehbar ausgeführt sein und auf einer weiteren Teilfläche einen Hintergrund 61 aufweisen, welcher beispielsweise in Zusammenhang mit einer Dunkelfeldbeleuchtung verwendbar ist und welcher eintreffende Strahlung weitgehend absorbiert. Alternativ kann die Rückseite des Zylinders 62 mit einem anderen Reflektor versehen werden, sodass durch Drehen des Zylinders 62 unterschiedliche Aufnahmen der Seitenwand 53 erstellt werden können.

In einigen Ausführungsformen der Erfindung ist auch das Objekt 5 relativ zur Bilderfassungseinrichtung 2 und der Lichtquelle 3 drehbar, sodass die gesamte Mantelfläche mit der Vorrichtung 1 geprüft werden kann.

Figur 6 zeigt eine dritte Ausführungsform der Vorrichtung 1. Auch die dritte Ausführungsform enthält eine Bilderfassungseinrichtung 2 mit einem Objekt 21. Weiterhin ist auch in der dritten Ausführungsform eine Lichtquelle vorgesehen, welche jedoch in Figur 6 nicht dargestellt ist. Beispielsweise kann die in Figur 4 oder Figur 1 dargestellte Lichtquelle 3 auch mit der dritten Ausführungsform gemäß Figur 6 kombiniert werden.

Figur 6 zeigt weiterhin ein Objekt 5, welches auch in diesem Fall ein Behälterglas mit einer Mündung 51 ist. Die Mündung 51 kann ein Gewinde aufweisen, welches das Aufschrauben eines Verschlusselementes ermöglicht.

Zur Prüfung des Mündungsbereichs 51 ist ein erster Reflektor 6a vorgesehen, welcher beispielsweise die Form einer Pyramide oder eines Konus aufweist. Der erste Reflektor 6a kann durch die Mündung 51 in das Objekt 5 eingeführt und im Mündungsbereich positioniert werden.

Weiterhin weist die Vorrichtung einen zweiten Reflektor 6b auf, welcher auf der Innenseite einer Zylindermantelfläche eines Hohlzylinders 63 angeordnet ist. Der Hohlzylinder 63 ist dazu vorgesehen, das Objekt 5 in seinem Inneren aufzunehmen.

Beispielhaft sind zwei Strahlengänge 22a und 22b gezeigt, welche auf unterschiedliche Teilflächen des ersten Reflektors 6a auftreffen und dort in etwa im 90°-Winkel reflektiert werden. Dabei durchdringen die Lichtstrahlen den Mündungsbereich 51 und werden am zweiten Reflektor 6b in die Einfallsrichtung zurückreflektiert, sodass jeder Lichtstrahl das Objekt 5 zweifach durchläuft.

Durch Erfassen einer Mehrzahl von Bildern mit der Bilderfassungseinrichtung 2, welche sich beispielweise in der Art des verwendeten Reflektors, der Lichtwellenlänge, der Polarisationsrichtung oder weiterer Parameter unterscheiden, können mehrere Bilder der Mündung 51 aufgenommen und einer Auswerteeinrichtung zugeführt werden. Somit kann die Form und/oder die Verschmutzung der Mündung 51 bestimmt werden. Insbesondere kann die Form eines Außengewindes an der Mündung 51 überprüft werden, sodass nur Behältergläser mit vollständigem Gewinde in einem nachfolgenden Prozess verwendet werden.

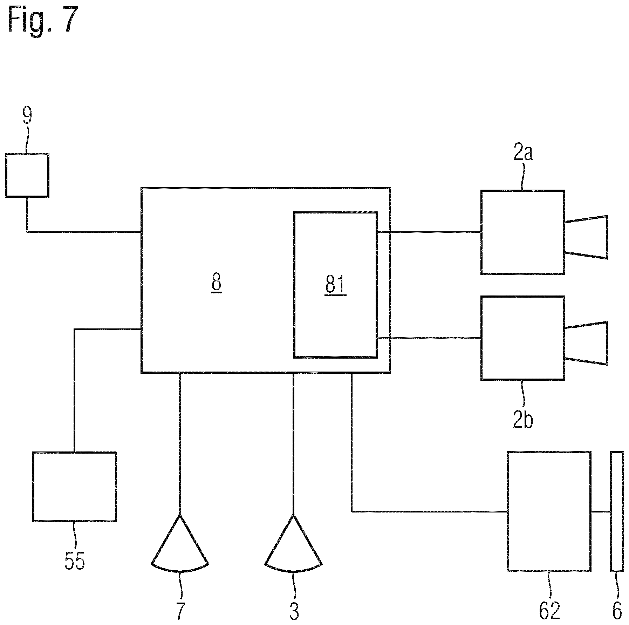

Figur 7 zeigt ein Blockschaltbild einer erfindungsgemäßen Vorrichtung 1. Die Vorrichtung 1 enthält zumindest eine Bilderfassungseinrichtung 2a. Im dargestellten Ausführungsbeispiel sind zwei Bilderfassungseinrichtungen 2a und 2b dargestellt, mit welchen Bilder des Prüfobjektes in unterschiedlichen Spektralbereichen, mit unterschiedlicher Polarisation, mit unterschiedlichem Abstand und/oder aus unterschiedlichen Richtungen aufgenommen werden können.

Weiterhin weist die Vorrichtung 1 einen optionalen Aktor 62 auf, mit welchem der Reflektor 6 bewegbar ist. Der Aktor 62 kann beispielsweise ein drehbarer Zylinder sein oder ein Linearantrieb, mit welchem der Abstand eines planen Reflektors 6 zum Prüfobjekt veränderbar ist.

Wie bereits vorstehend erläutert, weist die Vorrichtung 1 zumindest eine Lichtquelle 3 auf, deren Licht in etwa konzentrisch zum Erfassungsbereich der Bilderfassungseinrichtungen 2 abgestrahlt wird. Optional können mehrere Lichtquellen 3 vorhanden sein, welche Licht unterschiedlicher Wellenlänge und/oder unterschiedlicher Polarisation aussenden.

In einigen Ausführungsformen der Erfindung kann eine optionale Dunkelfeldbeleuchtung 7 vorhanden sein, um Dunkelfeldaufnahmen des Objektes zu ermöglichen.

Das Objekt selbst kann auf einem optionalen Manipulator bzw. einer Halterung 55 montiert sein, welche eine relative Bewegung zwischen dem Reflektor, der Bilderfassungseinrichtung und der Lichtquelle einerseits und dem Prüfobjekt andererseits ermöglicht. Hierzu kann der Manipulator 55 ein Goniometer, ein Hexapod, einen Drehtisch oder andere, an sich bekannte Komponenten enthalten.

In einigen Ausführungsformen der Erfindung weist die Vorrichtung 1 eine optionale Einrichtung 9 zur Erzeugung einer mechanischen Spannung in dem Objekt 5 auf. Die Einrichtung 9 kann beispielsweise das Objekt 5 mit Über- oder Unterdruck beaufschlagen oder durch eine Klemmung eine mechanische Kraft ausüben. Hierzu kann die Einrichtung 9 einen hydraulischen oder mechanischen Aktor, eine Vakuumpumpe, einen Kompressor oder andere, ähnliche Einrichtungen enthalten.

Die einzelnen Komponenten der Vorrichtung 1 können mit einer Steuer- und/oder Regeleinrichtung 8 kontrolliert werden, sodass ein vorgebbares Prüfprogramm mit einer Mehrzahl von Prüfschritten automatisiert ausgeführt wird, um die Prüfung an einem Objekt durchzuführen. Hierzu kann die Steuer- und/oder Regeleinrichtung 8 einen Mikroprozessor oder einen Microcontroller enthalten, auf welchem ein entsprechendes Programm läuft, welches die Lichtquellen 3 und 7 ein- oder ausschaltet, die Bilderfassungseinrichtungen 2a und 2b auslöst oder Aktoren, wie beispielsweise den Aktor 62, die Haltevorrichtung 55 oder die Einrichtung 9 schaltet.

Weiterhin kann eine Auswerteeinrichtung 81 vorhanden sein, welche die von den Bilderfassungseinrichtungen 2a und 2b erhaltenen Daten auswertet und/oder mit Referenzdaten vergleicht.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Soweit die Ansprüche und die vorstehende Beschreibung "erste" und "zweite" Merkmale definieren, so dient diese Bezeichnung der Unterscheidung zweier gleichartiger Merkmale, ohne eine Rangfolge festzulegen.

## Patentansprüche

1. Vorrichtung (1) zur Qualitätskontrolle transparenter Objekte (5), mit zumindest einer Lichtquelle (3, 7), welche dazu eingerichtet ist, das Objekt (5) zu Beleuchten und mit zumindest einer Bilderfassungseinrichtung (2), mit welcher zumindest ein Bild des Objekts (5) erfassbar ist, und mit zumindest einen Reflektor (6), wobei das Objekt (5) zwischen dem Reflektor (6) einerseits und der Bilderfassungseinrichtung (2) und der Lichtquelle (3) andrerseits plazierbar ist, wobeider Abstand zwischen dem Objekt (52) und dem Reflektor (6) veränderbar ist, **dadurch gekennzeichnet, dass** weiterhin eine Auswerteeinrichtung (81) vorhanden ist, mit welcher die Daten der Bilderfassungseinrichtung (2, 2a, 2b) auswertbar sind, indem der Auswerteeinrichtung zumindest zwei Bilder des transparenten Objektes (5) zuführbar sind und die Auswerteeinrichtung dazu eingerichtet ist, zumindest ein erstes Bild, welches unter Verwendung des Reflektors (6) aufgenommen wurde, mit zumindest einem zweiten Bild zu vergleichen, dessen Aufnahmebedingungen sich vom ersten Bild unterscheiden, indem der Abstand zwischen dem Objekt (5) und dem Reflektor (6) verändert wurde.

2. Vorrichtung nach Anspruch 1, **dadurch gekennzeichnet, dass** der Strahlengang der Bilderfassungseinrichtung so wählbar ist, dass sich nur eine einzelne Materiallage des Objektes zwischen Reflektor (6) und Bilderfassungseinrichtung (2) befindet.

3. Vorrichtung nach einem der Ansprüche 1 oder 2, weiterhin enthaltend eine Dunkelfeldbeleuchtung (7) und/oder eine Einrichtung zum Aufbringen einer mechanischen Spannung in das Objekt (5).

4. Vorrichtung nach einem der Ansprüche 1 bis 3, **dadurch gekennzeichnet, dass** der Reflektor (6) konusförmig ausgebildet ist und/oder
dass der Reflektor (6) pyramidenförmig ausgebildet ist und/oder
dass der Reflektor (6) auf zumindest einer Zylindermantelfläche (62, 63) angeordnet ist.

5. Vorrichtung nach einem der Ansprüche 1 bis 4, **dadurch gekennzeichnet, dass** die Lichtquelle (3) konzentrisch um das Objektiv (21) der Bilderfassungeinrichtung (2) angeordnet ist und/oder
dass die Vorrichtung einen Strahlteiler (4) enthält, über welchen der Erfassungbereich (22) der Bilderfassungseinrichtung (2) und der Lichtkegel (31) der Lichtquelle (3) zusammenführbar sind.

6. Verfahren zur Qualitätskontrolle transparenter Objekte (5), bei welchem das Objekt (5) mit zumindest einer Lichtquelle (3, 7), beleuchtet wird und zumindest ein Bild des Objekts (5) mit zumindest einer Bilderfassungseinrichtung (2) erfasst wird, wobei das Objekt (5) zumindest zeitweise zwischen einem Reflektor (6) einerseits und der Bilderfassungseinrichtung (2) und der Lichtquelle (3) andrerseits plaziert wird,
und ein erstes Bild, welches unter Verwendung des Reflektors (6) aufgenommen wurde, mit zumindest einem zweiten Bild verglichen wird, dessen Aufnahmebedingungen sich von denen des ersten Bildes unterscheiden, **dadurch gekennzeichnet, dass** der Abstand zwischen dem Objekt (5) und dem Reflektor (6) verändert wird, um den Unterschied in den Aufnahmebedingungen zu erzeugen.

7. Verfahren nach Anspruch 6, **dadurch gekennzeichnet, dass** der Strahlengang der Bilderfassungseinrichtung (2) so gewählt ist, dass sich nur eine einzelne Materiallage des Objektes zwischen Reflektor (6) und Bilderfassungseinrichtung (2) befindet.

8. Verfahren nach Anspruch 6 oder 7, **dadurch gekennzeichnet, dass** bei der Aufnahme der zumindest zwei Bilder des transparenten Objektes (5) die relative Lage und Orientierung des Objektes (5) zur Bilderfassungseinrichtung (2) erhalten bleibt.

9. Verfahren nach einem der Ansprüche 7 bis 8, **dadurch gekennzeichnet, dass** die weitere Lichtquelle das Objekt aus unterschiedlichen Winkeln und/oder aus unterschiedlichen Richtungen und/oder mit unterschiedlicher Polarisation und/oder mit unterschiedlichen Spektralbereichen beleuchtet oder eine Dunkelfeldbeleuchtung (7) umfasst.

10. Verfahren nach einem der Ansprüche 6 bis 9, **dadurch gekennzeichnet, dass** zumindest ein zweites Bild mit unterschiedlicher Vergrößerung und/oder aus unterschiedlichen Richtungen und/oder aus unterschiedlichem Abstand und/oder mit einer erhöhte Empfindlichkeit für unterschiedliche Polarisationsrichtungen und/oder unterschiedliche Spektralbereiche erfasst wird.

11. Verfahren nach einem der Ansprüche 6 bis 10, **dadurch gekennzeichnet, dass** das transparente Objekt (5) zwischen dem ersten Bild und dem zweiten Bild von einer ersten Bildaufnahmestation zu einer zweiten Bildaufnahmestation transportiert wird.

12. Verfahren nach einem der Ansprüche 6 bis 11, **dadurch gekennzeichnet, dass** der Reflektor (6) in einen Hohlkörper eingeführt wird.

## Claims

1. Device (1) for the quality control of transparent objects (5), comprising at least one light source (3, 7), which is configured to illuminate the object (5), and comprising at least one image capture device (2), with which at least one image of the object (5) can be captured, and comprising at least one reflector (6), it being possible to place the object (5) between the reflector (6), on the one hand, and the image capture device (2) and the light source (3), on the other hand, the distance between the object (52) and the reflector (6) being variable, **characterized in that** in addition an evaluation device (81) is present, with which the data of the image capture device (2, 2a, 2b) can be evaluated by supplying at least two images of the transparent object (5) to the evaluation device, and the evaluation device is configured to compare at least one first image, which was acquired using the reflector (6), with at least one second image, the acquisition conditions of which differ from the first image, by changing the distance between the object (5) and the reflector (6).

2. Device according to claim 1, **characterized in that** the beam path of the image capture device can be selected in such a way that only a single material layer of the object is located between the reflector (6) and the image capture device (2).

3. Device according to any of claims 1 or 2, further containing a dark field illumination (7) and/or an apparatus for applying a mechanical tension into the object (5).

4. Device according to any of claims 1 to 3, **characterized in that** the reflector (6) is cone-shaped and/or
**in that** the reflector (6) is pyramid-shaped and/or
**in that** the reflector (6) is arranged on at least one cylindrical lateral surface (62, 63).

5. Device according to any of claims 1 to 4, **characterized in that** the light source (3) is arranged concentrically around the objective (21) of the image capture device (2) and/or
**in that** the device contains a beam splitter (4) via which the capturing area (22) of the image capture device (2) and the light cone (31) of the light source (3) can be brought together.

6. Method for the quality control of transparent objects (5), in which the object (5) is illuminated with at least one light source (3, 7), and at least one image of the object (5) is captured with at least one image capture device (2), the object (5) being placed at least temporarily between a reflector (6), on the one hand, and the image capture device (2) and the light source (3), on the other hand, and a first image which was acquired using the reflector (6) being compared with at least one second image, the acquisition conditions of which differ from those of the first image, **characterized in that** the distance between the object (5) and the reflector (6) is varied to produce the difference in the acquisition conditions.

7. Method according to claim 6, **characterized in that** the beam path of the image capture device (2) is selected in such a way that only a single material layer of the object is located between the reflector (6) and the image capture device (2).

8. Method according to claim 6 or 7, **characterized in that** when at least two images of the transparent object (5) are acquired, the relative position and orientation of the object (5) with respect to the image capture device (2) is maintained.

9. Method according to any of claims 7 to 8, **characterized in that** the further light source illuminates the object from different angles and/or from different directions and/or with different polarization and/or with different spectral ranges or comprises a dark field illumination (7).

10. Method according to any of claims 6 to 9, **characterized in that** at least one second image is captured with different magnification and/or from different directions and/or from different distances and/or with increased sensitivity for different polarization directions and/or different spectral ranges.

11. Method according to any of claims 6 to 10, **characterized in that** the transparent object (5) is transported between the first image and the second image from a first image acquisition station to a second image acquisition station.

12. Method according to any of claims 6 to 11, **characterized in that** the reflector (6) is inserted into a hollow body.

## Revendications

1. Dispositif (1) pour le contrôle de qualité d'objets transparents (5), comportant au moins une source de lumière (3, 7) qui est conçue pour éclairer l'objet (5), et comportant au moins une unité d'acquisition d'images (2) permettant d'acquérir au moins une image de l'objet (5), et comportant au moins un réflecteur (6), l'objet (5) pouvant être placé entre le réflecteur (6), d'une part, et l'unité d'acquisition d'images (2) et la source de lumière (3), d'autre part, et la distance entre l'objet (52) et le réflecteur (6) pouvant être modifiée,
**caractérisé en ce que**
il est en outre prévu une unité d'évaluation (81) permettant d'évaluer les données de l'unité d'acquisition d'images (2, 2a, 2b) en fournissant à l'unité d'évaluation au moins deux images de l'objet transparent (5), l'unité d'évaluation étant configurée pour comparer au moins une première image, qui a été prise à l'aide du réflecteur (6), à au moins une deuxième image dont les conditions de prise de vue diffèrent de celles de la première image du fait que la distance entre l'objet (5) et le réflecteur (6) a été modifiée.

2. Dispositif selon la revendication 1, **caractérisé en ce que** le chemin optique de l'unité d'acquisition d'images peut être choisi de telle sorte qu'une seule couche de matériau de l'objet se trouve entre le réflecteur (6) et l'unité d'acquisition d'images (2).

3. Dispositif selon l'une des revendications 1 ou 2, comprenant en outre un éclairage sur fond obscur (7) et/ou un moyen pour appliquer une contrainte mécanique dans l'objet (5).

4. Dispositif selon l'une des revendications 1 à 3, **caractérisé en ce que** le réflecteur (6) est réalisé en forme conique et/ou
le réflecteur (6) est réalisé en forme pyramidale et/ou
le réflecteur (6) est disposé sur au moins une surface enveloppe cylindrique (62, 63).

5. Dispositif selon l'une des revendications 1 à 4, **caractérisé en ce que** la source de lumière (3) est disposée de manière concentrique autour de l'objectif (21) de l'unité d'acquisition d'images (2) et/ou le dispositif comprend un séparateur de faisceau (4) permettant de réunir la zone d'acquisition (22) de l'unité d'acquisition d'images (2) et le cône lumineux (31) de la source de lumière (3).

6. Procédé de contrôle de qualité d'objets transparents (5), dans lequel l'objet (5) est éclairé par au moins une source de lumière (3, 7), et au moins une image de l'objet (5) est acquise par au moins une unité d'acquisition d'images (2), l'objet (5) étant placé au moins temporairement entre un réflecteur (6), d'une part, et l'unité d'acquisition d'images (2) et la source de lumière (3), d'autre part, et une première image qui a été prise à l'aide du réflecteur (6) est comparée à au moins une deuxième image dont les conditions de prise de vue diffèrent de celles de la première image, **caractérisé en ce que** la distance entre l'objet (5) et le réflecteur (6) est modifiée pour engendrer la différence dans les conditions de prise de vue.

7. Procédé selon la revendication 6, **caractérisé en ce que** le chemin optique de l'unité d'acquisition d'images (2) est choisi de telle sorte qu'une seule couche de matériau de l'objet soit située entre le réflecteur (6) et l'unité d'acquisition d'images (2).

8. Procédé selon la revendication 6 ou 7, **caractérisé en ce que**, lors de la prise de vue desdites au moins deux images de l'objet transparent (5), la position et l'orientation relatives de l'objet (5) par rapport à l'unité d'acquisition d'images (2) restent maintenues.

9. Procédé selon l'une des revendications 7 à 8, **caractérisé en ce que** l'autre source de lumière éclaire l'objet sous différents angles et/ou depuis différentes directions et/ou avec une polarisation différente et/ou avec des plages spectrales différentes, ou elle comprend un éclairage sur fond obscur (7).

10. Procédé selon l'une des revendications 6 à 9, **caractérisé en ce qu'**au moins une deuxième image est acquise avec un grossissement différent et/ou depuis différentes directions et/ou à une distance différente et/ou avec une sensibilité accrue à différentes directions de polarisation et/ou à différentes plages spectrales.

11. Procédé selon l'une des revendications 6 à 10, **caractérisé en ce qu'**entre la première image et la deuxième image, l'objet transparent (5) est transporté d'une première station de prise de vue d'image à une deuxième station de prise de vue d'image.

12. Procédé selon l'une des revendications 6 à 11, **caractérisé en ce que** le réflecteur (6) est inséré dans un corps creux.
